# EUROPEAN PATENT APPLICATION

(11) **EP 0 694 435 A1**
(43) Date of publication of application: **31.01.1996**
(21) Application number: 95304665.3
(22) Date of filing: 04.07.1995
(51) Int. Cl.: B60N 2/28

(54) **Child safety seat for automotive vehicles**

(30) Priority: 26.07.1994 GB 9415067
(71) Applicant: Britax-Excelsior Limited, Warwick CV34 6DE (GB)
(72) Inventor: Barley, Geoffrey Wilfred, Salisbury, Wiltshire SP5 1DQ (GB)
(74) Representative: Hollinghurst, Antony

(57) **Abstract**

A child safety seat, for use in a vehicle equipped with standard anchorage units, comprises a seat body having a seat portion (30) which is connected by a pivot joint (36) to a backrest (32). A first rigid releasable coupling (38) is mounted on the backrest (32) and a second rigid releasable coupling (42) is mounted on the seat portion (30). The pivot joint (36) allows relative angular movement between the seat portion (30) and the backrest (32) between a first orientation in which the first rigid releasable coupling means (38) is engageable with a front standard anchorage unit and the second rigid releasable coupling means (42) is engageable with a rear standard anchorage unit and a second orientation in which the seat portion (30) is substantially in line with the backrest (32).

## Description

This invention relates to a child safety seat, for use in a vehicle, of the type comprising a seat body having a seat portion and a backrest and releasable coupling means for rigidly connecting the seat body to standard anchorage units on a motor vehicle.

It is well known for the coupling means of a seat of this type to comprise an adult seat belt, the child seat resting on the corresponding vehicle seat. The disadvantage of this arrangement is that, even if the adult belt is pulled very tight during installation, the resilience of both the vehicle seat and the adult belt, will permit undesirable movement of the child seat relative to the vehicle in the event of sudden deceleration, for example, during an accident. In order to overcome this disadvantage, it has been proposed to provide motor cars with standard anchorage units at agreed locations both in front of the seat and at the bottom of the backrest. In use, these anchorage are engaged by releasable connectors which are rigidly coupled to a child seat. Such anchorage units are herein referred to as "standard anchorage units", the anchorage units in front of the seat being called "front standard anchorage units" and the anchorage units at the bottom of the backrest being called "rear standard anchorage units".

According to the invention, a child safety seat, of the type described above, has first rigid releasable coupling means mounted on the backrest, second rigid releasable coupling means mounted on the seat portion, and pivot means pivotally connecting the seat portion to the backrest for relative angular movement between a first orientation in which the first rigid releasable coupling means is engageable with a front standard anchorage unit and the second rigid releasable coupling means is engageable with a rear standard anchorage unit and a second orientation in which the seat portion is substantially in line with the backrest.

The second orientation provides a compact easily stored configuration in which the first releasable coupling means are adjacent to the seat portion and the second releasable coupling means adjacent to the backrest.

Preferably the second releasable coupling means are rigidly mounted on the seat portion. The first releasable coupling means may also be rigidly mounted on the backrest. Alternatively the first releasable coupling means may be coupled to the backrest by mounting means allowing relative movement between the first releasable coupling means and the backrest, thereby making provision for adjustment of the distance between the first and second releasable coupling means.

Embodiments of the invention will now be described, by way of example, with reference to the accompanying drawings, in which:
Figure 1 is a perspective view of a vehicle seat equipped with standard anchorage units of the type described above;
Figure 2 is a side view of a child seat in accordance with a first embodiment of the invention, in an erect configuration ready to be attached to the standard anchorage units shown in Figure 1;
Figure 3 is a side view of the seat shown in Figure 2 in a folded configuration;
Figure 4 is a side view similar to Figure 2 of a second embodiment of the invention; and
Figure 5 is a side view similar to Figure 3 of the seat shown in Figure 4.

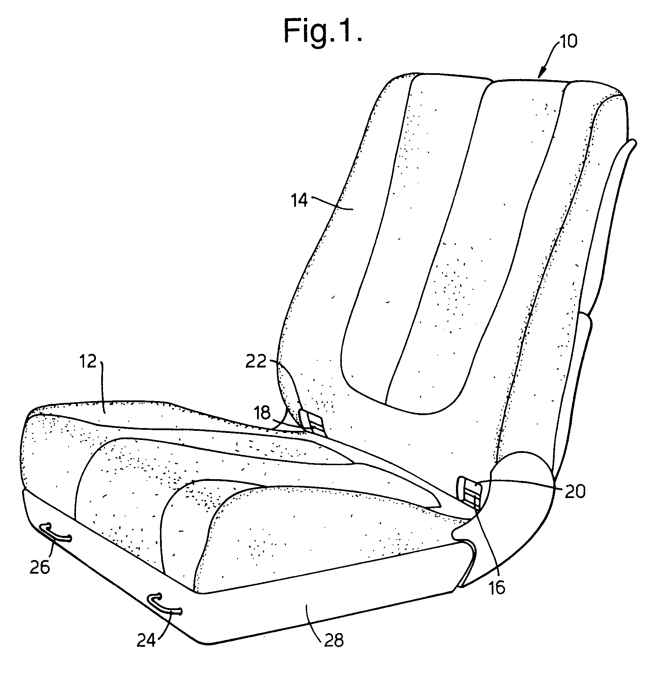

Figure 1 shows a vehicle seat 10 equipped with two front standard anchorage units and two rear standard anchorage units of the type described above. The seat comprises a seat portion 12 and a backrest 14. The rear standard anchorage units comprise transversely extending rods 16 and 18 which are accessible through openings 20 and 22 in the bottom of the backrest and which are rigidly secured to the frame (not shown) of the seat 10. The front standard anchorage units comprise U-shaped rods 24 and 26 which have the ends of their limbs secured to the front edge of a base portion 28 of the seat portion 12.

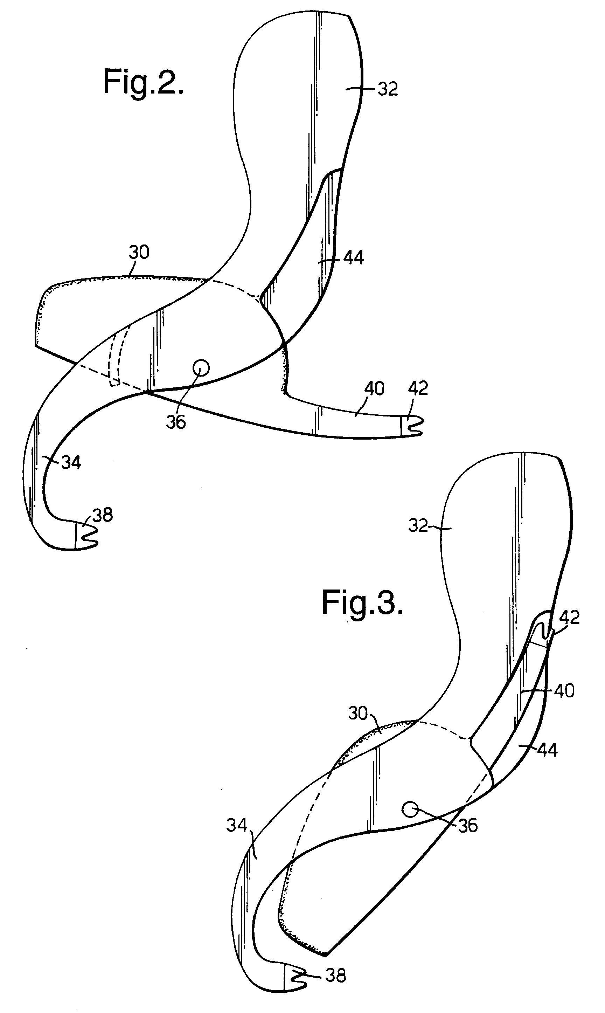

Figure 2 shows a child seat comprising a seat portion 30 and a backrest 32 which is formed integrally with a pair of front legs 34. The legs 34 project downwardly, one on each side of the seat portion 30 and carry a pivot shaft 36 by which the seat portion 30 is pivotally coupled to the backrest 32. Each of the front legs carries a respective buckle 38 for engagement with the standard anchorage units 24 and 26 shown in Figure 1.

A pair of rear legs 40 is formed integrally with the seat portion 30. Each rear leg 40 carries a respective buckle 42 for engagement with the rear standard anchorage units 16 and 18 shown in Figure 1. The backrest 32 is, therefore, held in a fixed position relative to the seat portion 30 when the four buckles 38 and 42 are engaged.

Referring to Figure 3, when the seat shown in Figure 2 is not in use, the seat portion 30 and backrest 32 may be pivoted into a position substantially in line with one another, the rear legs 40 being received in respective recesses 44. When folded in this way, the child seat is compact and easily stored.

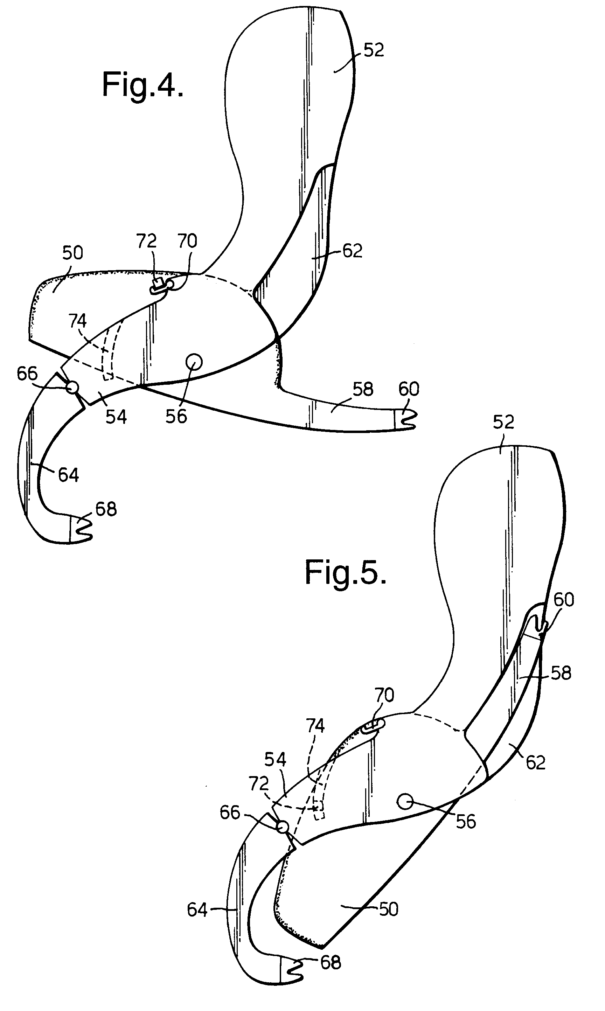

The distance between the front standard anchorage units 24 and 26 on the one hand and the rear standard anchorage units 16 and 18 on the other may vary to suit vehicles with different lengths of the seat portion 12. With the child seat illustrated in Figures 2 and 3 such variations cause slight changes in the angle between the seat portion 30 and the backrest 32 when the seat is in use. Figures 4 and 5 illustrate another child safety seat which is not subject to this variation.

The seat shown in Figures 4 and 5 has a seat portion 50 and a backrest 52, the latter having integral front legs 54 which extend on each side of the seat portion 52 and are coupled thereto by a pivot shaft 56. The seat portion 50 has a pair of integrally formed rear legs 58, each of which carries a respective buckle 60 for engagement with the rear standard anchorage units 16 and 18 of Figure 1. The backrest 52 has recesses 62 for receiving the rear legs 58 when the seat is in its folded configuration, as illustrated in Figure 5.

The front legs 54 are shorter than the legs 34 of Figures 2 and 3 and each has a respective front leg extension 64 which is connected by a pivot pin 66 to the bottom end of the corresponding leg 54 and which carries a buckle 68 on its lower end for engagement with a corresponding one of the front standard anchorage units 24 and 26. The pivot joints formed by the pins 66 are constructed so as to permit only a limited range of relative angular movement, sufficient to accommodate the required range of variation of distance between the front standard anchorage units 24 and 26 and the rear standard anchorage units 16 and 18 in different vehicles.

A latch 70 is pivotally mounted on one of the front legs 54 for engagement with a detent formation 72 on the adjacent side of the seat portion 50. This holds the backrest 52 in a fixed position relative to the seat portion 50 when the seat is in its erect configuration shown in Figure 4. The leg 54 carrying the latch 70 has an arcuate groove 74 in which the detent formation 72 is received when the seat is folded to the configuration shown in Figure 5.

The buckles 38, 42, 60 and 68 may be as described in EP-A-0619201.

## Claims

1. A child safety seat, for use in a vehicle, comprising a seat body having a seat portion (30) and a backrest (32) and releasable coupling means (38) for rigidly connecting the seat body to standard anchorage units (16, 18, 24, 26) on a motor vehicle, characterised by first rigid releasable coupling means (38) mounted on the backrest (32), second rigid releasable coupling means (42) mounted on the seat portion (30), and pivot means (36) pivotally connecting the seat portion (30) to the backrest (32) for relative angular movement between a first orientation in which the first rigid releasable coupling means (38) is engageable with a front standard anchorage unit (24, 26) and the second rigid releasable coupling means (42) is engageable with a rear standard anchorage unit (16, 18) and a second orientation in which the seat portion (30) is substantially in line with the backrest (32).

2. A child safety seat according to claim 1, wherein the second releasable coupling means (42) is rigidly mounted on the seat portion (30).

3. A child safety seat according to claim 1 or 2, wherein the first releasable coupling means (38) is rigidly mounted on the backrest (32).

4. A child safety seat according to claim 1 or 2, wherein the first releasable coupling means (38) is mounted on a rigid link which is pivotally coupled to the backrest (32) so as to allow a predetermined range of relative movement between the first releasable coupling means (38) and the backrest (32).

5. A child safety seat according to any preceding claim, in combination with a vehicle, the vehicle having an adult vehicle seat (10) with a seat portion (12) and a backrest portion (14), a front anchorage unit (24, 26) rigidly secured to the vehicle below the front edge of a vehicle seat (10) for engagement by one of said releasable connectors and a rear anchorage unit (16, 18) rigidly secured to the vehicle at the bottom of the backrest portion of the vehicle seat for engagement by another of said releasable connectors.
